# EUROPEAN PATENT SPECIFICATION

(11) **EP 0 848 845 B1**
(45) Date of publication and mention of the grant of the patent: **17.12.2003**
(21) Application number: 96930232.2
(22) Date of filing: 09.09.1996
(51) Int. Cl.: G07C 5/00, A01B 79/00

(54) **TRACTOR WITH MONITORING SYSTEM**
SCHLEPPER MIT ÜBERWACHUNGSSYSTEM
TRACTEUR AVEC SYSTEME DE SURVEILLANCE

(30) Priority: 05.09.1995 GB 9518029
(43) Date of publication of application: 24.06.1998
(73) Proprietor: AGCO LIMITED, Coventry CV4 9GF (GB)
(72) Inventor: MURRAY, Karen, Christina, Totnes, Devon TQ9 6BB (GB); MOORE, Mark, Ramon, Warwickshire CV8 1RY (GB)
(74) Representative: Simpson, Paul Christopher
(86) International application number: GB9602216
(87) International publication number: WO97009696

(56) References cited:
- EP-A- 0 201 658
- EP-A- 0 458 107
- WO-A-82/01354
- WO-A-86/05353
- WO-A-86/06190
- DE-A- 3 642 502
- DE-A- 4 322 293
- DE-A- 4 342 171
- US-A- 5 220 876

## Description

The present invention relates to a tractor with a monitoring system and means for locating the tractor.

It is known to display sensed parameters on an electronic tractor monitoring system. It is also known to provide a location system, eg a GPS satellite location system, in a combine harvester and to combine information from such a system with, for example, a continuous signal representative of the rate of flow of grain entering the harvester, thereby to produce a "yield map" showing grain yield as a map over an area where the combine harvester has travelled.

US 5220876 describes a variable rate fertiliser spreading apparatus for spreading a precise amount of multiple types of fertilisers upon a field based upon location in the field.

WO 8606190 describes a vehicle performance monitoring apparatus for displaying the values of a plurality of performance parameters of a vehicle.

WO 82/01354 describes a method and apparatus for controlling a plurality of subsystems associated with an agricultural vehicle, such as a tractor. A unified control system is provided including a central control unit having a first microprocessor and a plurality of subservient control units each having a microprocessor.

WO 86/05353 describes an agricultural husbandry process, whereby the location of a harvesting machine is associated with the crop yield at individual locations in order to produce a yield map, which may be manipulated to develop a treatment map.

The object of the present invention is to provide a tractor with an improved monitoring system.

In accordance with the present invention a tractor is provided having the features of Claim 1 hereto, with optional features listed in Claims 2 to 7. A method in accordance with the invention is set out in Claim 8 hereto, with preferable features set out in Claims 9 and 10 hereto.

Further features and details of the present invention will be apparent from the following specific description given by way of example only with reference to the accompanying drawings in which:
- Figure 1: is a schematic side sectional view of a tractor in accordance with the invention, and
- Figure 2: is an example map produced in accordance with the invention.

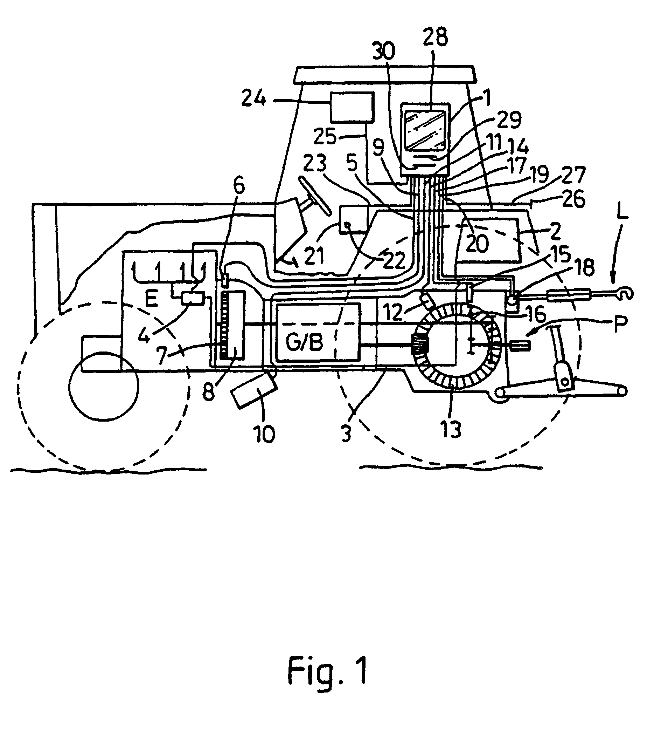

Referring firstly to Figure 1, a tractor in accordance with the invention comprises the standard elements of an engine E, gearbox G/B, PTO output shaft P, and three point linkage L

Situated in the tractor cab is an electronic monitoring system analasys/display unit 1 into which run lines from a number of electronic sensors on the tractor.

A fuel tank 2 is housed at the rear of the tractor and a fuel line 3 passes from the tank to the engine E via a fuel flow sensor 4 An electronic output from the fuel flow sensor 4 is connected via line 5 to the display unit 1

A further sensor 6 for detecting engine speed, is of the magnetic inductance type and is mounted adjacent a gear 7 which drives the engine oil pump The electronic output of the sensor 6 is connected via a line 9 to the display unit 1.

A radar speed sensor 10 is mounted underneath the tractor for detecting actual speed over the ground. The sensor 10 is connected via a line 11 to the display unit 1.

A further magnetic inductance sensor 12 is associated with the crown wheel 13 on the rear axle of the tractor for detecting "theoretical" forward speed (ie forward speed with no wheel slip) The electronic output of the inductance sensor 12 is connected via a line 14 to the display unit 1

A further magnetic inductance sensor 15 is associated with the power take off gearbox 16 and detects the PTO speed. The electronic output of the sensor 15 is connected via a line 17 to the display unit 1

The three point linkage L has both draft force and position sensors associated with the top link joint, the sensors being commonly shown in Figure 1 by the numeral 18 The force sensor is of known type, taking the form of a joint pin incorporating strain gauges The electronic output from the force sensor is connected via a signal line 19 to the display unit 1. The position of the linkage, that is to say its height, is measured by a rotary potentiometer associated with the top link joint The potentiometer is connected via a line 20 to the display unit 1

Situated in the tractor cab is an electronic linkage control unit 21 of known type, which includes a linkage lift/lower control 22. The electronic linkage control unit is connected via a line 23 to the display unit 1

The tractor is fitted with a GPS satellite navigation system 24 which is connected via signal line or lines 25 to the display unit 1.

Finally, a socket 26 is provided for receiving an input signal from an implement connected to the tractor, and this is connected via a line 27 to the display unit 1.

The display unit 1 includes a touch sensitive screen 28 via which a number of functions connected with monitoring/displaying tractor parameters may be selected and controlled. The unit 1 also allows the various parameters as sensed on the tractor, as well as information derived therefrom, to be displayed on the screen 28, or alternatively output on to a data carrier inserted into a slot 29, or alternatively output in printed form on a paper tape output from slot 30.

The display unit 1 is essentially also a data processing unit, as will be appreciated from what has been said above The unit includes an integral clock, a microprocessor and electronic memory. Software to enable the functions described above to be performed, is stored and implemented by the unit 1. The unit 1 is programmed to accept the input of certain parameters either manually via the touch screen or via a data carrier, such as a magnetic disk or PCMIA card inserted in to the slot 29 The unit 1 is also programmed to receive information from the GPS navigation system 24 and combine this with any of the parameters sensed by the various sensors around the tractor together with any relevant data input manually or via a data carrier. In this way, the unit produces maps of tractor speed information which may be combined with manually input information.

At its simplest level, the system may be used to generate, for example, a map of fuel used per hectare when performing an operation with a soil penetrating implement. To generate such a map, the unit 1 would employ information from the GPS unit 24, from the fuel flow sensor 4, from the tractor speed sensor 10 and from a manual input representative of the width of the implement being used, and thus the width of the strip of field processed on any given run of the tractor. The unit 1 would also use the input from the electronic linkage control 21, which includes an indication of whether the implement is in a raised or lowered condition and therefore out of work or in work Lastly, the unit 1 would use information from its integral clock.

A realistic map of fuel used per hectare may then be generated by continuously sensing the fuel flow data from the sensor 4 and continuously calculating the rate at which area is being covered (derived from speed and implement width), and sampling these parameters repeatedly at known positions of the tractor (from the GPS) At each sampling point, a value for fuel used since the last sample is divided by hectares covered since the last sample and this fuel/hectare value correlated to tractor position At the end of each run, the linkage will of course be raised to bring the implement out of work and this fact will be recognised by the unit 1 from the signal on line 23 from the electronic linkage control 21. The amount of fuel used from the time the implement is lifted out of work until the time it is returned into work at the start of the next run can be retrospectively added to the series of fuel/hectare values for the previous run, being apportioned equally over all the readings Alternatively, the value for fuel used can be stored and then apportioned equally over the readings for the next run. Either way, the fuel used per hectare figure for a narrow portion of field with very short runs will reflect the fact that the tractor spends a relatively large percentage of its time turning on headlands.

In a simple modification of the above process, the fuel used per hectare figure can be amended to a fuel cost per hectare figure by the simple incorporation of a manually input unit fuel cost figure

It will be appreciated that the operation described above involves automatic sensing of lifting and lowering of the tractor linkage at each end of a run (simply by noting the position of the lift/lower switch 22) Alternatively, in an operation where the linkage is not lifted and lowered at the end/start of each run (eg spreading fertiliser), a further manual input can be provided in the form of an icon on the touch screen which is touched at the end and the start of each run. Alternatively, this information could be input directly from the implement via the socket 26 and line 27. There could also be some form of connection between the unit 1 and a cab mounted implement control unit to achieve the same result.

The above described operation is a novel and relatively simple way of providing an indication of the cost of performing a process on a field, showing how that cost is distributed across the field A more useful way of doing this is to combine all or at least most of the sensed tractor parameters described above with data input manually or via a data carrier as follows
1 cost of tractor driver per hour;
2 depreciation of tractor per hour,
3 maintenance cost of tractor per hour;
4 a parameter representative of tractor tyre cost per hour;
5 a parameter representative of soil type.

The cost of a driver's wages, depreciation and maintenance need no explanation, their effect on the cost of the tractor operation is self-explanatory Actual tractor tyre wear is influenced by a number of factors, so a basic tyre cost parameter is used representing purchase cost depreciated over an average tyre lifetime. This is then modified by the unit 1 according to the soil type parameter, since certain types of soil will wear a tyre quicker than others. Other factors used to calculate actual tyre wear, and therefore cost, are wheel slip, which is directly calculated from the actual speed sensor 10 and theoretical speed sensor 12, draft force from the draft force sensor 18 assuming a soil penetrating implement is attached, and forward speed from the sensor 10

A possibility with this system is the generation of cumulative treatment cost maps A previously generated cost map for a given treatment, eg ploughing a field, may be inserted into the unit 1, and then information relating to the cost of a second process added as the second process is performed. If this is done for every treatment applied to the field, a reasonably true indication of the cost of growing that crop, as mapped across the field, may be produced. In addition, the previous year's yield in the form of a map on a data carrier may be input into the unit 1 together with a manually input figure representative of the value of the crop per tonne. In this way, a "gross margin" map can be produced which gives a direct indication of which parts of the field are more profitable than others and which may show that some parts of the field are actually making a loss.

For some field operations, the cost is going to be relatively uniform and mapping, therefore, not really worthwhile. In this case, a manually input constant value of cost/hectare may be used for one or more of the field processes, when generating a cumulative cost map as described above.

A useful variation of the above is to produce a map of "field efficiency", that is to say the percentage of time spent working the field as opposed to turning on headlands, combined with a constant value for cost/hour. Cost/hectare is then calculated "on the go" during a run, based on speed and implement width, and sampled at intervals for mapping as with the previously described mapping processes. At the end of each run, the cost of the time spent turning before starting the next run is calculated and averaged over the sampled values (or alternatively stored and then averaged over the sampled values for the next run) A refinement of this would be to have different constant cost/hour values for "in work" and "out of work".

A map of field efficiency alone can also be very useful, ie a map simply showing an efficiency value for each tractor run. Such a map may be used to design field shapes and/or the direction of ploughing etc.

It should be noted that field efficiency will vary between processes, the time spent on headlands will generally be much more significant for a fast process than a slow one.

For any map of cost related data, field efficiency is one of the major factors contributing to cost and may be used in many different ways

Although mapping cost related parameters is very useful, this invention is not restricted to the mapping of cost related parameters. A map showing one of the tractor sensed parameters mentioned above as distributed over a field during a given treatment process can be useful in its own right. For example, the variation of PTO speed during a fertiliser spreading process can be useful to monitor since the map may show that PTO speed dropped to an unacceptable level for part of the time, in which case the spread of fertiliser may have been inadequate and may require subsequent treatment to ensure that sufficient fertiliser is applied. Such a map could be derived using data either from the PTO speed sensor or engine speed sensor, since the PTO gear ratio will be a known constant.

Another parameter which could usefully be mapped during, say, a ploughing operation, is linkage height. If the linkage control is in draft control mode, as is conventional for a ploughing operation, the linkage height will be automatically adjusted to maintain draft force constant. Consequently, a map of linkage height gives an indication of where areas of difficult soil are

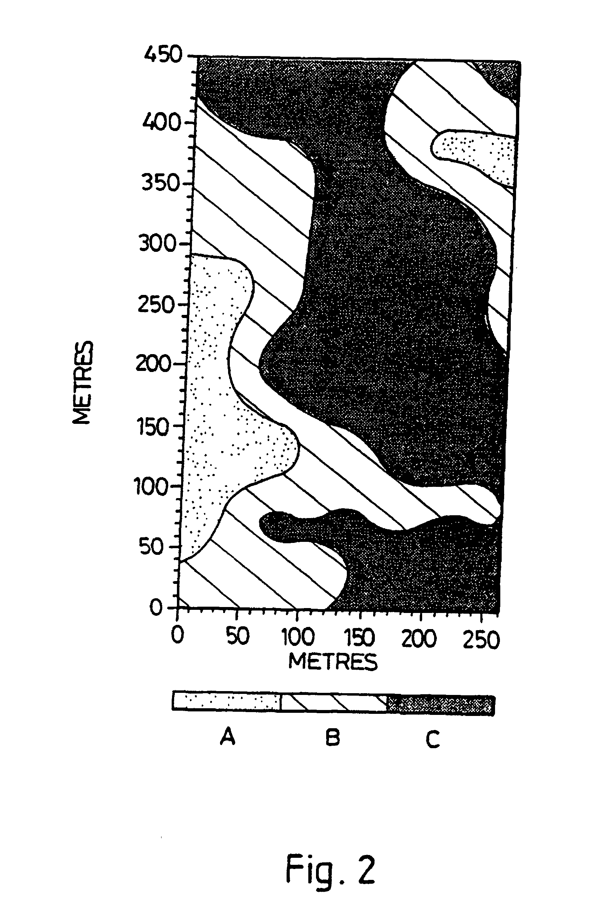

For any of the types of map described above, the presentation of the map will be most useful if a certain shading or colour is given to each area of the field map where the mapped parameter falls in a given range. An example of this is shown in Figure 2 where three ranges of mapped parameter are used, A, B and C The actual parameter shown on this map is unimportant - it could be any of those described above or any number of other possibilities.

The software with which the unit 1 is programmed has the facility to allow selection of ranges for creating a map of the form shown in Figure 2.

## Claims

1. Apparatus for mapping the performance of an agricultural tractor during an agricultural field operation, wherein the tractor includes an engine (E), a transmission, at least one power take off shaft (P) and at least one three point linkage (L), and wherein the apparatus includes an electronic monitoring system (1), the said monitoring system monitoring a plurality of performance parameters of said tractor, and wherein the system comprises:
a) means for displaying and/or producing an output of information;
b) sensors for sensing, and generating sensed data indicative of said tractor performance, the sensors including sensors (6, 10, 12, 15, 18) for sensing the speed of said tractor, the status of the or each power take off shaft, and the or each three point linkage, and engine performance;
c) processing means for processing the sensed data to provide performance parameter values from the data generated by said sensors;
d) locating means (24) for establishing the position of the tractor,
e) position data recording means for recording the position of the tractor from the locating means at intervals as the tractor traverses the field; and
f) map generating means for combining performance parameter values from said sensors and processed by said processing means with position data to generate a map representing variation in performance of the tractor across the field.

2. Apparatus as claimed in Claim 1, wherein the said sensors include one or more selected from the group comprising:
(a) an actual speed sensor (10) for directly sensing the actual speed of the tractor over ground;
(b) a theoretical speed sensor (12) for sensing from the tractor transmission the theoretical speed of the tractor if no wheel slip is occurring;
(c) an engine speed sensor (6) for detecting the revolutions made by the engine of the tractor per unit time;

3. Apparatus according to Claim 2, wherein the said sensors include a fuel flow sensor (4) for detecting the fuel used by the tractor engine per unit time.

4. Apparatus as claimed in Claim 1 or Claim 2, wherein the said sensors including a power take off speed sensor (15) or sensors for sensing the revolutions per unit time made by the power take off shaft or shafts.

5. Apparatus as claimed in any preceding claim wherein the said sensors for sensing the status of the or each three point linkage include one or more sensors selected from the group comprising:
(a) a linkage position sensor (20);
(b) a sensor for detecting whether the linkage is in a raised or lowered state;
(c) a draft force sensor (18) or sensor on the linkage or linkages for sensing the draft force exerted on the tractor by any implement attached to the tractor.

6. Apparatus as claimed in any preceding claim, the monitoring system (1) including means for inputting, either manually or from a data carrier or by remote communication, data representative of one or more parameters selected from the following group, or a combination or combinations thereof:
(a) width of an implement attached to the tractor;
(b) cost of fuel;
(c) cost of tractor driver;
(d) depreciation cost of tractor;
(e) maintenance cost of tractor;
(f) tractor tyre cost;
(g) a parameter representative of soil type;
(h) crop value;
(i) crop yield;
(j) cost of a field treatment process;
(k) starting/stopping an operation of an implement attached to the tractor;
wherein the said combining means includes means for combining some or all of the said input data with one or more sensed tractor parameters and with positional information from the locating means to produce a map of a parameter derived from the said sensed parameter(s) and from input data selected from the said group as distributed across an area over which the tractor has travelled.

7. Apparatus as claimed in any preceding claim, wherein the monitoring system (1) includes means for receiving an electronic input representative of implement width directly from an implement.

8. Apparatus as claimed in Claim 2 and Claim 4, or any claim when dependent thereon, the sensors including the said linkage raised/lowered state sensor and the said actual speed (10) and fuel flow sensors (4), the monitoring system further comprising means for noting the time and/or tractor location of a first lowering of the linkage, first raising of the linkage and a second lowering of the linkage, and means for calculating the fuel used between the said first raising and second lowering, and adding an equal portion of the said fuel used value, or a value derived therefrom, to each sample in a series of sampled sensed parameters sampled in the interval between the said first lowering and first raising.

9. A method of generating a map of estimated actual cost involved in applying a treatment or treatments to an area of agricultural land, as distributed over the said area of land, the method comprising:
(a) driving a tractor comprising a performance monitoring apparatus according to any of Claims 1 to 7, with an implement attached thereto for applying the said treatment, across the said area of land until the entire area is treated;
(b) prior to or during the said driving step, inputting into the said monitoring system data representative of one or more parameters selected from the following group, or a combination or combinations thereof:
(i) width of the said implement;
(ii) cost of fuel;
(iii) cost of tractor driver;
(iv) depreciation cost of tractor;
(v) maintenance cost of tractor;
(vi) tractor tyre cost;
(vii) a parameter representative of soil type;
(viii) data representative of the cost of a previous treatment or treatments of the said area of land;
(ix) the starting/stopping of an operation of an implement attached to the said tractor;
(c) during the said driving step, automatically generating the said map using sensed performance parameters, input data selected from the said group and positional information from the said locating means.

10. A method as claimed in Claim 8 further including the step of combining data representative of a unit crop value and data in the form of a map of yield from a previous harvest of the said crop from the said area of land with the said sensed parameter(s), the said input data and the said positional information to produce a map representing gross profit margin as distributed across the said area, the said further combining step being performed as the tractor is driven across the field.

11. A method as claimed in Claim 8 or Claim 9 wherein the said sensed tractor parameters include fuel flow rate, actual tractor speed and the lifting/lowering of the linkage, the further method comprising the steps of:-
(a) noting the time and/or tractor location at a first lowering of the linkage, first raising of the linkage and a second lowering of the linkage;
(b) calculating the fuel used between the said first raising and second lowering;
(c) adding the calculated fuel used value, or a value derived therefrom, to data gathered in the interval between the said first lowering and first raising of the linkage.

12. A tractor substantially comprising apparatus for mapping the performance of said tractor according to any of Claims 1 to 7.

## Patentansprüche

1. Vorrichtung zum Aufzeichnen der Leistung eines landwirtschaftlichen Schleppers während der Bearbeitung eines landwirtschaftlichen Feldes, wobei der Schlepper einen Motor (E), ein Getriebe, mindestens eine Abtriebswelle (P) und mindestens eine Dreipunktanlenkung (L) aufweist, und wobei die Vorrichtung ein elektronisches Überwachungssystem (1) besitzt, das eine Mehrzahl Leistungsparameter des Schleppers überwacht und wobei das System folgende Elemente aufweist:
a) Mittel zum Anzeigen und/oder Erzeugen einer Ausgangsinformation;
b) Sensoren zum Erfassen und Erzeugen ermittelter, für die Leistung des Schleppers aussagekräftiger Daten, wobei die Sensoren Sensoren (6, 10, 12, 15, 18) zum Erfassen der Geschwindigkeit des Schleppers, des Status der oder jeder Abtriebswelle, und der oder jeder Dreipunktanlenkung und der Motorleistung aufweisen;
c) Verarbeitungsmittel zum Verarbeiten der ermittelten Daten zum Bereitstellen von Werten der Leistungsparameter aus den von den Sensoren erzeugten Daten;
d) Ortungsmittel (24) zum Feststellen der Position des Schleppers;
e) Mittel zum Aufzeichnen der Positionsdaten des Schleppers der Ortungsmittel in Intervallen, wenn sich der Schlepper über das Feld bewegt: und
f) Mittel zum Zeichnen einer Karte in Zuordnung der Werte der Leistungsparameter der Sensoren und verarbeitet durch die Verarbeitungsmittel mit Positionsdaten zur Aufstellung einer Karte, die die Änderung der Leistung des Schleppers über dem Feld wiedergibt.

2. Vorrichtung nach Anspruch 1, **dadurch gekennzeichnet, dass** die Sensoren ein oder mehrere Elemente aus der nachfolgenden Gruppe aufweisen:
(a) einen aktuellen Geschwindigkeitssensor (10) zum Erfassen der tatsächlichen Geschwindigkeit des Schleppers über dem Boden;
(b) einen theoretischen Geschwindigkeitssensor (12) zum Erfassen der theoretischen Geschwindigkeit des Schleppers aus dem Getriebe des Schleppers, wenn kein Radschlupf auftritt;
(c) einen Geschwindigkeitssensor (6) für den Motor zum Erfassen der. Drehzahl des Motors des Schleppers über der Zeiteinheit;

3. Vorrichtung nach Anspruch 2, **dadurch gekennzeichnet, dass** die Sensoren einen Sensor (4) zum Erfassen des Treibstoffflusses durch den Motor des Schleppers pro Zeiteinheit umfassen.

4. Vorrichtung nach Anspruch 1 oder 2, **dadurch gekennzeichnet, dass** die Sensoren einen Geschwindigkeitssensor (15) oder Sensoren zum Erfassen der Drehzahl der Abtriebswelle oder der Abtriebswellen pro Zeiteinheit umfassen.

5. Vorrichtung nach Anspruch 2, **dadurch gekennzeichnet dass** die Sensoren zum Erfassen des Status des oder der Dreipunktanlenkung einen oder mehrere Sensoren aus der nachfolgenden Gruppe umfassen:
(a) einen Positionssensor (20) für die Anlenkung;
(b) einen Sensor zum Erfassen des angehobenen oder abgesenkten Status der Anlenkung;
(c) einen Zugkraftsensor (18) oder einen Sensor auf der Anlenkung oder den Anlenkungen zum Erfassen der Zugkraft, die von jedem mit dem Schlepper verbundenen Arbeitsgerät auf den Schlepper ausgeübt wird.

6. Vorrichtung nach einem der vorangehenden Ansprüche, **dadurch gekennzeichnet, dass** das Überwachungssystem (1) Mittel zum manuellen Eingeben oder Eingeben von einem Datenträger oder durch Fernübermittlung aufweist, wobei die Daten hinsichtlich eines oder mehrerer Parameter aus der nachfolgenden Gruppe oder einer Kombination oder von Kombinationen davon repräsentativ sind:
(a) Breite eines mit dem Schlepper verbundenen Arbeitsgerätes;
(b) Treibstoffkosten;
(c) Kosten für den Fahrer des Schleppers;
(d) Kosten für den Wertverlust des Schleppers;
(e) Unterhaltskosten des Schleppers;
(f) Kosten für die Reifen des Schleppers;
(g) einen für den Bodentyp aussagekräftigen Parameter,
(h) Wert der Ernte;
(i) Emteertrag;
(j) Kosten der Feldbearbeitung;
(k) Anfang/Ende eines Einsatzes eines mit dem Schlepper verbundenen Arbeitsgeräts;
wobei die Kombinationsmittel Mittel zum Kombinieren einiger oder aller Eingabedaten mit einem oder mehreren erfassten Parametern des Schleppers und mit Positionsinformation der Ortungsmittel zum Erzeugen einer Karte eines Parameters aufweisen, der von dem oder den erfassten Parameter(n) und von eingegebenen Daten aus der Gruppe abgeleitet ist, wie sie über eine Fläche ausgegeben werden, über die sich der Schlepper bewegt hat.

7. Vorrichtung nach einem der vorangehenden Ansprüche, **dadurch gekennzeichnet, dass** das Überwachungssystem (1) Mittel zur Aufnahme einer elektronischen Eingabe der Arbeitsbreite eines Arbeitsgerätes direkt von dem Arbeitsgerät aufweist.

8. Vorrichtung nach Anspruch 2 oder 4 oder einem davon abhängigen Anspruch, **dadurch gekennzeichnet, dass** die Sensoren einen Sensor zum Erfassen des angehobenen/abgesenkten Status der Anlenkung und Sensoren (4) zum Erfassen der tatsächlichen Geschwindigkeit (10) und des Treibstoffverbrauchs aufweisen, dass das Überwachungssystem weiterhin Mittel zum Notieren der Zeit und/oder der Position des Schleppers einer ersten Absenkung der Anlenkung, des ersten Anhebung der Anlenkung und einer zweiten Absenkung der Anlenkung und Mittel zum Ausrechnen des Treibstoffverbrauchs zwischen dem ersten Anheben und dem zweiten Absenken und zum Hinzufügen eines gleichen Teils des Treibstoffwertes oder eines davon abgeleiteten Wertes aufweist, und zwar für jede Probe einer Reihe von erfassten Probenparametern in dem Intervall zwischen dem ersten Absenken und dem ersten Anheben.

9. Ein Verfahren zum Erstellen einer Karte der zu erwartenden tatsächlichen Kosten, die mit der Anwendung einer Bearbeitung oder Bearbeitungen einer Fläche eines landwirtschaftlichen Feldes verbunden sind und entsprechend der Fläche anfallen, **gekennzeichnet durch** folgende Verfahrensschritte:
(a) Fahren eines Schleppers mit einer Vorrichtung zum Anzeigen einer Leistung nach einem der Ansprüche 1 bis 7, mit einem damit verbundenen Arbeitsgerät für die Anwendung der Bearbeitung über die Fläche des Feldes bis die ganze Fläche bearbeitet ist;
(b) Eingeben repräsentativer Daten eines oder mehrerer Parameter aus der nachfolgenden Gruppe oder einer Kombination oder von Kombinationen davon vor oder während des Fahrens:
(i) Breite des Arbeitsgerätes;
(ii) Treibstoffkosten;
(iii) Kosten für den Fahrer des Schleppers;
(iv) Kosten für den Wertverlust des Schleppers;
(v) Unterhaltskosten des Schleppers;
(vi) Kosten für die Reifen des Schleppers;
(vii) einen für den Bodentyp aussagekräftigen Parameter,
(viii) repräsentative Kostendaten einer früheren Bearbeitung oder früherer Bearbeitungen der Fläche des Feldes;
(ix) Anfang/Ende eines Einsatzes eines mit dem Schlepper verbundenen Arbeitsgeräts;
(c) Automatische Erstellung der Karte unter Nutzung der erfassten Leistungsparameter, der Eingabedaten aus der Gruppe und der Positionsinformation der Ortungsmittel während des Fahrens.

10. Ein Verfahren nach Anspruch 8, **dadurch gekennzeichnet, dass** für einen Ernteeinheitswert repräsentative Daten und Daten in Form einer Ertragskarte einer früheren Ernte von dieser Fläche des Feldes mit dem oder den erfassten Parameter(n), der Eingabedaten und der Positionsinformation kombiniert werden, um eine Karte zu erzeugen, die Marge des Gesamtgewinns in ihrer Verteilung über das Feld wiedergibt, und dass dieser weitere Kombinationsschritt während der Fahrt des Schleppers über das Feld durchgeführt wird.

11. Ein Verfahren nach Anspruch 8 oder 9, **dadurch gekennzeichnet, dass** die erfassten Parameter des Schleppers die Treibstoffverbrauchsrate, die tatsächliche Geschwindigkeit des Schleppers und das Anheben/Absenken der Anlenkung umfassen, wobei das Verfahren noch folgende Schritte aufweist:
(a) Erfassen der Zeit und/oder der Position des Schleppers während der ersten Absenkung der Anlenkung, der ersten Anhebung der Anlenkung und der zweiten Absenkung der Anlenkung;
(b) Berechnen des Treibstoffverbrauchs zwischen dem ersten Anheben und dem zweiten Absenken;
(c) Addieren des berechneten Wertes des Treibstoffverbrauchs oder eines davon abgeleiteten Wertes zu Daten, die in dem Intervall zwischen dem ersten Absenken und dem ersten Anheben der Anlenkung gesammelt wurden.

12. Ein Schlepper, der im wesentlichen die Vorrichtung zum Aufzeichnen der Leistung des Schleppers nach einem der Ansprüche 1 bis 7 aufweist.

## Revendications

1. Dispositif adapté pour produire un graphique des performances d'un tracteur agricole durant son fonctionnement dans un champ agricole, dans lequel le tracteur comprend un moteur (E), une transmission, au moins un arbre de prise de force (P) et au moins un attelage à trois points (L), et dans lequel le dispositif comprend un système de surveillance électronique (1), ledit système de surveillance étant adapté pour surveiller une pluralité de paramètres de performance dudit tracteur, et dans lequel le système comprend :
a) des moyens adaptés pour afficher et/ou produire un tirage des informations ;
b) des capteurs adaptés pour détecter et générer des données détectées indiquant les performances dudit tracteur, les capteurs comprenant des capteurs (6, 10, 12, 15, 18) adaptés pour détecter la vitesse d'avancement dudit tracteur, la condition de l'arbre de force ou de chacun des arbres de prise de force, ainsi que la condition de l'attelage à trois points ou de chacun des attelages à trois points, et les performances du moteur ;
c) des moyens de traitement adaptés pour traiter les données détectées afin de fournir des valeurs de paramètres de performances à partir des données générées par lesdits capteurs ;
d) des moyens de positionnement (24) adaptés pour établir la position du tracteur ;
e) des moyens d'enregistrement des données de position adaptés pour enregistrer la position du tracteur à partir des moyens de positionnement à des intervalles donnés, à mesure que le tracteur traverse le champ ; et
f) des moyens de production de graphique adaptés pour combiner les valeurs de paramètres de performances générées par lesdits capteurs et traitées par lesdits moyens de traitement avec les données de position, afin de produire un graphique représentant les variations de performance du tracteur à mesure qu'il traverse le champ.

2. Dispositif selon la revendication 1, dans lequel lesdits capteurs comprennent un ou plusieurs capteurs pris dans le groupe comprenant :
(a) un capteur de vitesse d'avancement réelle au sol (10) adapté pour détecter directement la vitesse d'avancement réelle du tracteur sur le terrain ;
(b) un capteur de vitesse théorique (12) adapté pour détecter la vitesse théorique du tracteur à partir de la transmission du tracteur si aucun patinage de roue ne se produit ;
(c) un capteur de régime du moteur (6) adapté pour détecter le nombre de tours effectué par le moteur du tracteur par unité de temps.

3. Dispositif selon la revendication 2, dans lequel lesdits capteurs comprennent un capteur de débit de carburant (4) adapté pour détecter la quantité de carburant utilisée par le moteur du tracteur par unité de temps.

4. Dispositif selon la revendication 1 ou la revendication 2, dans lequel lesdits capteurs comprennent un ou plusieurs capteur(s) de régime de la prise de force (15) adapté (s) pour détecter le nombre de tours effectué par unité de temps par l'arbre de prise de force ou les arbres de prise de force.

5. Dispositif selon l'une quelconque des revendications précédentes dans lequel lesdits capteurs adaptés pour détecter la condition de l'attelage à trois points ou de chacun des attelage à trois points comprennent un ou plusieurs capteurs choisis dans le groupe comprenant :
(a) un capteur de position de l'attelage (20) ;
(b) un capteur adapté pour détecter si l'attelage se trouve dans une position relevée ou une position abaissée ;
(c) un capteur de commande d'effort (18) ou un capteur placé sur l'attelage ou sur les attelages, adapté(s) pour détecter l'effort de traction exercé sur le tracteur par l'un quelconque des outils qui sont raccordés au tracteur.

6. Dispositif selon l'une quelconque des revendications précédentes, dans lequel le système de surveillance (1) comprend en outre des moyens adaptés pour entrer, soit manuellement soit à partir d'un support de données soit par l'intermédiaire d'un système de communication à distance, les données représentatives d'un ou de plusieurs paramètres choisis dans le groupe suivant, ou bien une combinaison ou bien des combinaisons de ceux-ci :
(a) la largeur d'un outil raccordé au tracteur;
(b) le coût du carburant ;
(c) le coût du conducteur du tracteur ;
(d) le coût de la dépréciation du tracteur ;
(e) le coût de la maintenance du tracteur;
(f) le coût des pneus du tracteur;
(g) un paramètre représentatif du type de sol du champ;
(h) la valeur de la récolte ;
(i) le rendement de la récolte ;
(j) la coût d'un processus de traitement du champ ;
(k) la mise en route / l'arrêt du fonctionnement d'un outil raccordé au tracteur ;
dans lequel lesdits moyens de combinaison comprennent des moyens adaptés pour combiner certaines ou toutes lesdites données saisies avec un ou plusieurs des paramètres détectés du tracteur et avec les informations de position obtenues à partir des moyens de positionnement, afin de produire un graphique d'un paramètre dérivé dudit ou desdits paramètre (s) détecté(s) et à partir des données saisies choisies dans ledit groupe et réparties sur une superficie du champ à travers laquelle le tracteur s'est déplacé.

7. Dispositif selon l'une quelconque des revendications précédentes, dans lequel le système de surveillance (1) comprend des moyens adaptés pour recevoir une donnée d'entrée électronique représentative de la largeur de l'outil directement à partir d'un outil.

8. Dispositif selon la revendication 2 et la revendication 4, ou selon l'une quelconque des revendications lorsqu'elles dépendent de celles-ci,
dans lequel les capteurs comprennent ledit capteur adapté pour détecter une position relevée ou une position abaissée de l'attelage ainsi que ledit capteur de vitesse d'avancement réelle au sol (10) et ledit capteur de débit de carburant (4) ; le système de surveillance comprenant en outre des moyens adaptés pour noter le moment et/ou l'emplacement du tracteur lors d'un premier abaissement de l'attelage, lors d'un premier relevage de l'attelage et lors d'un second abaissement de l'attelage, et des moyens adaptés pour calculer la quantité de carburant utilisée entre ledit premier relevage et ledit second abaissement de l'attelage et adaptés pour ajouter une portion égale de ladite valeur finale de quantité de carburant utilisée, ou une valeur dérivée à partir de celle-ci, à chaque échantillon d'une série de paramètres échantillonnés détectés, échantillonnés durant l'intervalle compris entre ledit premier abaissement et ledit premier relevage de l'attelage.

9. Procédé de production d'un graphique d'un coût réel estimé induit par l'application d'un traitement ou de plusieurs traitements sur une certaine superficie d'un champ agricole, réparti sur ladite superficie de terrain, ledit procédé comprenant les étapes consistant à :
(a) conduire un tracteur comprenant un dispositif de surveillance des performances selon l'une quelconque des revendications 1 à 7, avec un outil raccordé au tracteur, dans le but d'appliquer ledit traitement, sur ladite superficie de terrain jusqu'à ce que la totalité de la superficie soit traitée ;
(b) avant ou durant l'étape consistant à conduire le tracteur, entrer dans ledit système de surveillance des données représentatives d'un ou de plusieurs paramètres choisis dans le groupe suivant, ou bien une combinaison de, ou bien des combinaisons de ceux-ci :
(i) la largeur dudit outil ;
(ii) le coût du carburant ;
(iii) le coût du conducteur du tracteur ;
(iv) le coût de la dépréciation du tracteur ;
(v) le coût de la maintenance du tracteur;
(vi) le coût des pneus du tracteur ;
(vii) un paramètre représentatif du type de sol du champ ;
(viii) les données représentatives du coût d'un traitement ou de plusieurs traitements précédent (s) de ladite superficie de terrain ;
(ix) la mise en route / l'arrêt du fonctionnement d'un outil raccordé au tracteur.
(c) durant ladite étape consistant à conduire le tracteur, produire automatiquement ledit graphique en utilisant les valeurs de paramètres de performances détectées, les données d'entrée choisies dans ledit groupe et les informations de position obtenues à partir desdits moyens de positionnement.

10. Procédé selon la revendication 8 comprenant en outre l'étape consistant à combiner des données représentatives d'une valeur de récolte unitaire et des données sous la forme d'un graphique de rendement provenant d'une précédente moisson de ladite récolte sur ladite superficie de terrain, avec ledit ou lesdits paramètre(3) détecté(s), lesdites données d'entrée et lesdites informations de position, afin de produire un graphique représentant la marge brute réalisée répartie sur la totalité de ladite superficie de terrain, ladite une autre étape de combinaison étant exécutée tandis que le tracteur se déplace à travers le champ.

11. Procédé selon la revendication 8 ou la revendication 9 dans lequel lesdits paramètres détectés du tracteur comprennent le débit de carburant, la vitesse d'avancement réelle au sol du tracteur ainsi que les opérations de relevage et d'abaissement de l'attelage, l'autre procédé comprenant en outre les étapes consistant à :
(a) noter le moment et/ou l'emplacement du tracteur lors d'un premier abaissement de l'attelage, lors d'un premier relevage de l'attelage et lors d'un second abaissement de l'attelage;
(b) calculer la quantité de carburant utilisée entre ledit premier relevage et ledit second abaissement ;
(c) ajouter la valeur calculée de la quantité de carburant utilisée ou une valeur dérivée de celle-ci aux données recueillies durant l'intervalle compris entre ledit premier abaissement et ledit premier relevage de l'attelage.

12. Tracteur comprenant sensiblement un dispositif adapté pour produire un graphique de performances dudit tracteur selon l'une quelconque des revendications 1 à 7.
